# FASCICULE DE BREVET EUROPEEN

(11) **EP 3 587 071 B1**
(45) Date de publication et mention de la délivrance du brevet: **21.10.2020**
(21) Numéro de dépôt: 19180995.3
(22) Date de dépôt: 18.06.2019
(51) Int. Cl.: B29C 49/48

(54) **UNITÉ DE MOULAGE ÉQUIPÉE D'UN INSERT DE BOXAGE MOBILE VENTILÉ PAR UN CIRCUIT FLUIDIQUE DERIVÉ DU CIRCUIT FLUIDIQUE DE BOXAGE**
FORMGUSSEINHEIT, DIE MIT EINEM MOBILEN EINSATZ ZUR ERSTELLUNG VON BOXEN AUSGESTATTET IST, DER DURCH EINEN VOM FLUIDKREISLAUF DER BOXEN-ERSTELLUNG ABGELEITETEN FLUIDKREISLAUF BELÜFTET WIRD
MOULDING UNIT PROVIDED WITH AN INSERT FOR MOBILE BOXING VENTILATED BY A FLUID CIRCUIT DERIVED FROM THE BOXING FLUID CIRCUIT

(30) Priorité: 21.06.2018 FR 1855473
(43) Date de publication de la demande: 01.01.2020
(73) Titulaire: Sidel Participations, 76930 Octeville-sur-Mer (FR)
(72) Inventeur: BECHEN, Régis, 76930 OCTEVILLE SUR MER (FR); GUITON, Camille, 76930 OCTEVILLE SUR MER (FR)
(74) Mandataire: Sidel Group

(56) Documents cités:
- EP-A1- 2 344 320
- EP-A1- 2 379 304
- WO-A1-2015/150648
- FR-A1- 2 939 070

## Description

L'invention a trait au formage des récipients, notamment des bouteilles, des flacons ou encore des bidons, à partir d'ébauches en matière thermoplastique (tel que le polytéréphtalate d'éthylène ou PET), et plus particulièrement des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée à une température supérieure à la transition vitreuse de la matière (laquelle est d'environ 80°C dans le cas du PET) de manière à permettre sa déformation plastique.

Lorsqu'elle est introduite dans le moule, une ébauche en PET est typiquement à une température d'environ 120°C à 140°C. Le soufflage est rapide ; lorsqu'elle atteint la paroi du moule, l'ébauche est encore à une température d'environ 100°C.

Le cycle de soufflage, d'une durée de l'ordre de 1,5 s, étant répété des milliers de fois, les contacts successifs des ébauches contre la paroi du moule porteraient celle-ci à une température permanente d'environ 100°C si la paroi n'était pas régulée thermiquement au moyen d'un circuit de refroidissement interne.

De fait, il est connu de réguler thermiquement un moule au moyen d'un circuit fluidique comprenant des canaux percés dans la paroi du moule, dans lesquels circule un fluide caloporteur (cf. par ex. le brevet européen EP2106898 (Sidel).

Certains récipients peuvent être munis de réserves formées en creux vers l'intérieur du récipient et réalisées dans un but esthétique (par ex. création de galbes) ou fonctionnel (réalisation d'une poignée de préhension du récipient).

Pour y parvenir, on emploie généralement une unité de moulage munie d'un insert mobile initialement escamoté dans la paroi du moule et déployé en présence du récipient en cours de formation dans le moule pour repousser la matière lorsque celle-ci atteint la paroi, comme illustré
dans la demande de brevet européen EP3272495 ou son équivalent américain US2018022010 (Sidel Participations), ou encore dans le document de brevet publié sous le numéro WO 2015/150648 (Sidel Participations) qui décrit une unité de moulage selon le préambule de la revendication 1.

Une difficulté posée par cette architecture est que les inserts, en contact répété avec la matière de l'ébauche, ont tendance à chauffer jusqu'à atteindre des températures de l'ordre de 100°C. Ainsi, la partie de l'ébauche qui vient au contact de l'insert n'est pas refroidie et demeure à une température supérieure à la température de transition vitreuse. Dans la zone de contact avec l'insert, la matière de l'ébauche reste donc malléable et n'a pas le temps de se refroidir suffisamment et de se figer avant le dégazage du récipient, qui consiste à évacuer l'air de soufflage avant de procéder à son évacuation du moule de formage. Il en résulte qu'à l'issue du dégazage, dans ces zones encore chaudes du récipient, la matière peut se déformer en subissant un phénomène de retrait (encore appelé "shrinkage"), de sorte qu'en définitive la forme finale du récipient ne correspond pas à la forme souhaitée.

Il apparaît donc nécessaire de refroidir l'insert.

Des solutions ont, par le passé, été proposées pour refroidir l'insert, cf. par ex. le brevet européen EP2344320 (Sidel) qui décrit un circuit de refroidissement incluant des canaux pratiqués dans l'insert et dans lesquels circule un fluide caloporteur amené via des tiges sur lesquelles l'insert est monté, ces tiges étant elles-mêmes fixées sur une platine portant des raccords sur lesquels sont branchées des tubulures souples d'amenée et d'évacuation du fluide caloporteur.

Cette architecture est encombrante ; elle est adaptée à un moule de type linéaire, dans lequel la paroi est subdivisée en deux demi-moules montés en translation l'un par rapport à l'autre, mais elle ne convient à un moule de type portefeuille, dans lequel la place est comptée. En particulier, il est impossible, en pratique, d'intercaler entre le moule et son support des flexibles par lesquels on amènerait le fluide caloporteur supposé alimenter les inserts.

En outre, cette architecture impose de réaliser un circuit complexe d'alimentation de l'insert en fluide caloporteur, qui comprend ses propres électrovannes.

Le besoin demeure par conséquent de proposer une solution, adaptée notamment aux moules de type portefeuille, permettant de simplifier l'amenée d'un fluide caloporteur aux inserts mobiles.

A cet effet, il est proposé une unité de moulage pour le formage d'un récipient, cette unité de formage comprenant :
- Un moule muni d'une paroi latérale définissant une cavité à l'empreinte d'une partie du récipient ;
- Un insert ayant une face frontale à l'empreinte d'une partie locale du récipient, mobile entre une position rétractée et une position déployée, cet insert étant percé de canaux ;
- Un piston sur lequel est fixé l'insert et qui assure la mobilité de celui-ci entre sa position rétractée et sa position déployée, ce piston étant lui-même monté en translation dans un évidement creusé dans la paroi latérale, le piston définissant une chambre fluidique primaire située du côté du piston opposé à l'insert et dans laquelle débouche au moins un conduit d'amenée d'un fluide sous pression, pratiqué dans la paroi latérale ;
- Au moins une vis par laquelle l'insert est fixé sur le piston.

Dans cette unité de moulage, les canaux de l'insert sont en communication fluidique avec la chambre primaire par l'intermédiaire d'un circuit fluidique qui comprend au moins une première section ménagée dans la vis et qui communique avec les canaux de l'insert, et une deuxième section ménagée dans le piston, qui communique avec la première section.

Diverses caractéristiques supplémentaires peuvent être prévues, seules ou en combinaison :
- La vis de fixation de l'insert est percée d'un alésage central qui la traverse de part en part et forme la première section du circuit fluidique.
- Le piston est pourvu d'au moins un canon en saillie, sur lequel l'insert est fixé par la vis, ce canon étant creux et comprenant un puits central qui forme la deuxième section du circuit fluidique.
- L'unité de moulage comprend au moins une tige fixe de guidage du piston, sur laquelle celui-ci est monté coulissant.
- Le circuit fluidique comprend une troisième section ménagée dans la tige de guidage, qui communique avec la deuxième section.
- La troisième section du circuit fluidique comprend un alésage central pratiqué dans la tige de guidage, et des trous radiaux qui débouchent d'une part dans la chambre primaire et d'autre part dans l'alésage central.
- La tige de guidage est emboîtée dans le canon, son alésage central débouchant dans le puits central de celui-ci.
- La tige de guidage est montée sur une chemise rapportée emboîtée dans l'évidement, dans laquelle le piston est monté en translation, et avec laquelle le piston définit la chambre primaire.
- Les canaux débouchent sur une face arrière de l'insert, tournée du côté du piston.
- L'insert comprend une pluralité de canaux divergents à partir d'un sommet commun et répartis selon un cône.

D'autres objets et avantages de l'invention apparaîtront à la lumière de la description d'un mode de réalisation, faite ci-après en référence aux dessins annexés dans lesquels :
- La **FIG.1** est une vue en coupe et en perspective d'une unité de moulage pour le formage de récipients par soufflage ;
- La **FIG.2** est une vue en coupe de l'unité de moulage, laquelle est équipée d'une paire d'inserts mobiles permettant de réaliser une poignée dans le récipient pendant son formage ;
- La **FIG.3** est une vue d'un détail, à plus grande échelle, de l'unité de moulage de la **FIG.2****,** délimité par l'encart III, montrant un insert en position rétractée ;
- La **FIG.4** est une vue similaire à la FIG.3, montrant l'insert en position déployée ;
- La **FIG.5** est une vue en perspective de l'insert, du côté de sa face arrière ;
- La **FIG.6** est une vue en perspective de l'insert, coupé par le plan VI-VI de la **FIG.5** ;
- la **FIG.7** est une vue en perspective d'un récipient formé dans une unité de moulage telle qu'illustrée sur les figures précédentes.

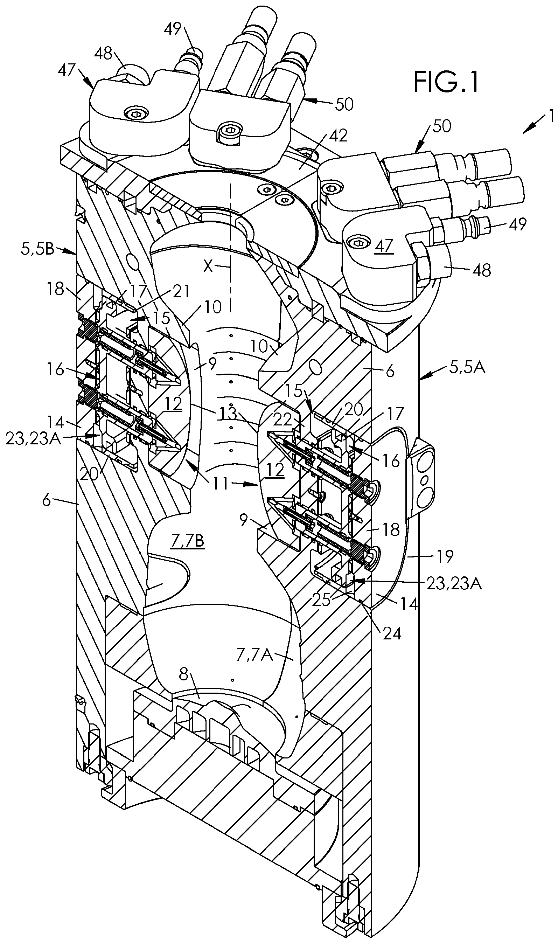

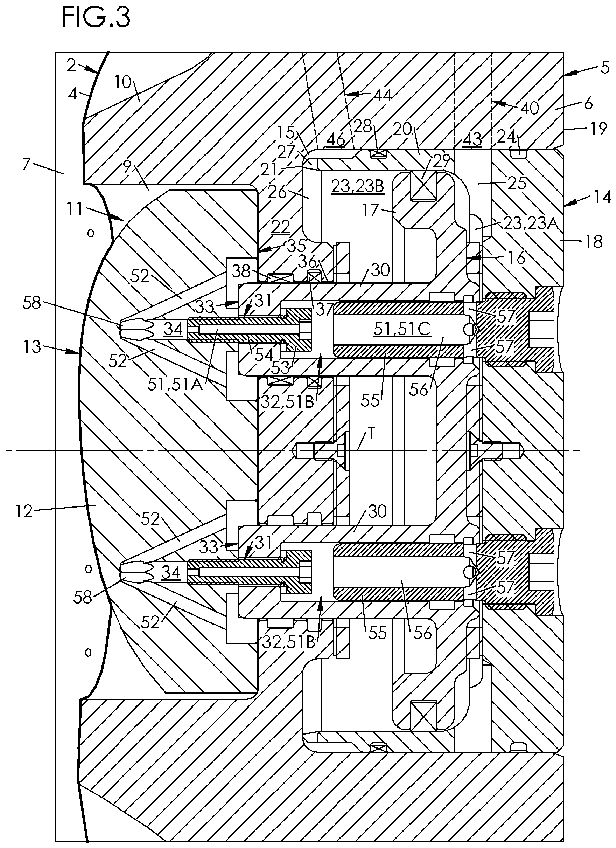

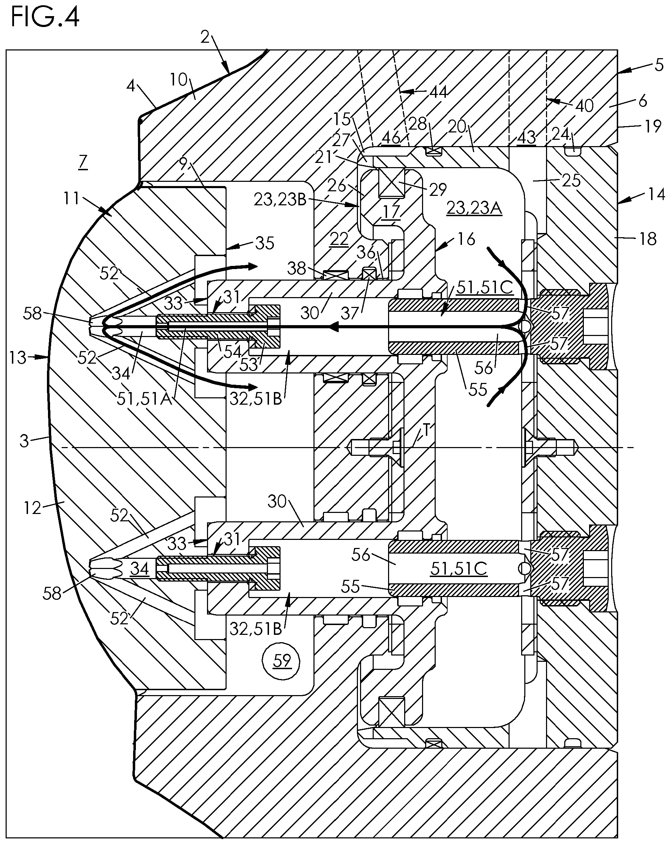

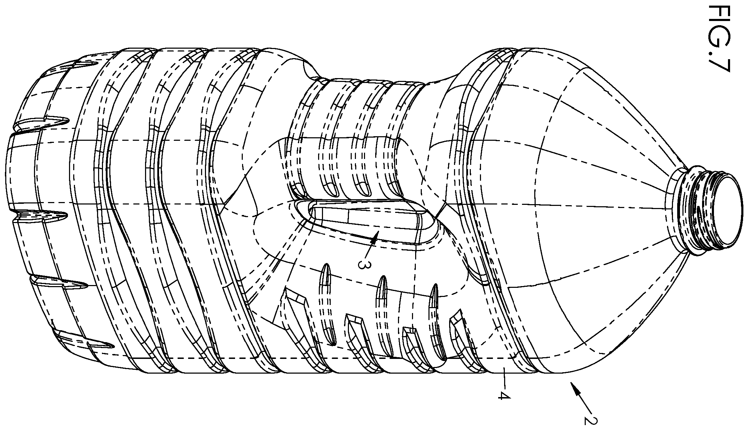

Sur la **FIG.1** est représentée, en coupe et en perspective, une unité **1** de moulage pour le formage, à partir d'une ébauche (typiquement une préforme), d'un récipient **2,** tel qu'une bouteille ou un bidon, comme illustré sur la **FIG.7****,** muni d'une réserve **3** formée en creux vers l'intérieur du récipient **2.** Le récipient **2** est pourvu, de manière classique, d'un corps **4,** d'un fond et d'un col qui s'ouvre à l'opposé du fond. Dans l'exemple illustré sur les **FIG.3** et **FIG.4****,** la réserve **3** en creux est une poignée formée dans le corps **4** du récipient pour en faciliter la préhension.

L'unité **1** de moulage comprend, en premier lieu, un moule **5** muni d'une paroi **6** latérale qui définit une cavité **7** à l'empreinte d'une partie du récipient **2.** En l'espèce, la cavité **7** est à l'empreinte du corps **4** du récipient **2,** le moule **5** comprenant en outre un fond **8** à l'empreinte du fond du récipient **2.** Le moule **5** est réalisé en métal, par exemple en acier ou en aluminium (ce terme couvrant également les alliages d'aluminium). La cavité **7** (et donc le récipient **2)** s'étend suivant un axe **X** principal qui définit une direction verticale. Tout plan perpendiculaire à l'axe **X** principal est dit horizontal.

Selon un mode de réalisation illustré sur les dessins, la paroi **6** latérale comprend deux demi-moules **5A, 5B** définissant chacun une demi-empreinte **7A, 7B** du corps **4** du récipient **2** et montés en rotation l'un par rapport à l'autre autour d'un axe commun formé par une charnière, entre :
- Une position ouverte, dans laquelle les demi-moules **5A, 5B** sont écartés angulairement l'un de l'autre et le fond **8** de moule est abaissé relativement aux demi-moules **5A, 5B** pour permettre l'introduction de l'ébauche et l'évacuation du récipient **2** formé,
- Une position fermée, dans laquelle les demi-moules **5A, 5B** sont appliqués l'un contre l'autre et emprisonnent entre eux le fond **8** de moule (ce qui est illustré sur la **FIG.1****),** pour former ainsi la cavité **7** et définir l'empreinte du récipient **2** à former.

La paroi **6** latérale est pourvue d'un logement **9** qui s'ouvre dans la cavité **7.** Ce logement **9** est formé en creux dans une excroissance **10** formant une saillie vers l'intérieur de la cavité **7** et formant une partie de la contre-empreinte de la réserve **3** en creux définissant la poignée.

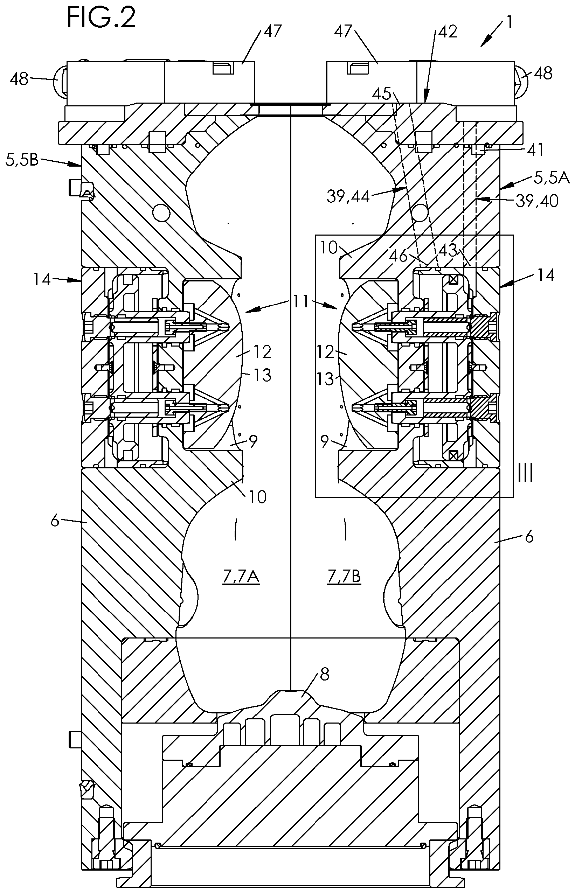

Selon un mode de réalisation illustré notamment sur les **FIG.1** et **FIG.2****,** correspondant à un récipient **2** pourvu de deux réserves **3** en creux, de préférence symétriques par rapport à un plan central de symétrie générale du récipient **2** et formant conjointement la poignée (tel le récipient **2** de la FIG.7), un logement **9** est ménagé chaque demi-moule **5A, 5B.** Plus précisément, chaque logement s'ouvre dans la demi-empreinte **7A, 7B** du demi-moule **5A, 5B** respectif et est formé en creux dans une excroissance **10** ménagée en saillie vers l'intérieur de la cavité **7** dans le demi-moule **5A, 5B** respectif.

L'unité **1** de moulage comprend en deuxième lieu, et pour chaque logement **9,** un dispositif **11** de boxage. Le terme « boxage » désigne une technique de modelage local de la matière par repoussage au moyen d'une pièce mobile, pratiqué pendant le formage du récipient **2** (et plus précisément initié entre le présoufflage et le soufflage du récipient **2).**

Chaque dispositif **11** de boxage comprend un insert **12,** de forme complémentaire d'un logement **9** et reçu dans celui-ci. Chaque insert **12** présente une face **13** frontale à l'empreinte d'une partie locale (c'est-à-dire de faible superficie relative) du récipient **2,** et plus précisément du fond de la réserve **3** en creux. La face **13** frontale est destinée à venir repousser la matière du récipient **2** pour compléter l'empreinte de la réserve **3** en creux, comme il sera expliqué ci-après. L'insert **12** est avantageusement réalisé en aluminium.

Comme on le voit sur les **FIG.1** et **FIG.2****,** l'unité **1** de moulage est équipée d'une paire de dispositifs **11** de boxage (de préférence symétriques) dont les inserts **12** sont placés en regard l'un de l'autre.

Chaque insert **12** est monté en translation par rapport à la paroi **6** latérale (c'est-à-dire, dans l'exemple illustré, par rapport à chaque demi-moule **5A, 5B)** suivant un axe **T** transversal (cet axe est visible sur les **FIGS. 3** et **4****)** entre une position rétractée (illustrée sur les **FIG.1****,** **FIG.2****,** **FIG.3****)** dans laquelle l'insert **12** est au moins en partie escamoté dans le logement **9,** et une position déployée (illustrée sur la **FIG.4****)** dans laquelle l'insert **12** fait au moins en partie saillie dans la cavité **7** hors du logement **9.**

Plus précisément, et comme cela est bien visible sur la **FIG.3****,** en position rétractée de l'insert **12,** la face **13** frontale est incluse dans le logement **9** et ne dépasse pas de l'excroissance **10,** tandis qu'en position déployée de l'insert **12,** et comme cela est bien visible sur la **FIG.4****,** la face **13** frontale fait saillie dans la cavité **7** et s'étend dans le prolongement de l'excroissance **10** pour compléter avec celle-ci l'empreinte de la réserve **3** formée en creux dans le récipient **2.**

Cette configuration n'est pas exclusive. Ainsi, selon un autre mode de réalisation, en position rétractée de l'insert **12,** la face **13** frontale de l'insert **12** est située en retrait par rapport au bord interne de l'excroissance **10.** Selon encore un autre mode de réalisation, en position rétractée de l'insert **12,** la face **13** frontale de l'insert **12** se trouve dans le prolongement du bord interne de l'excroissance **10.**

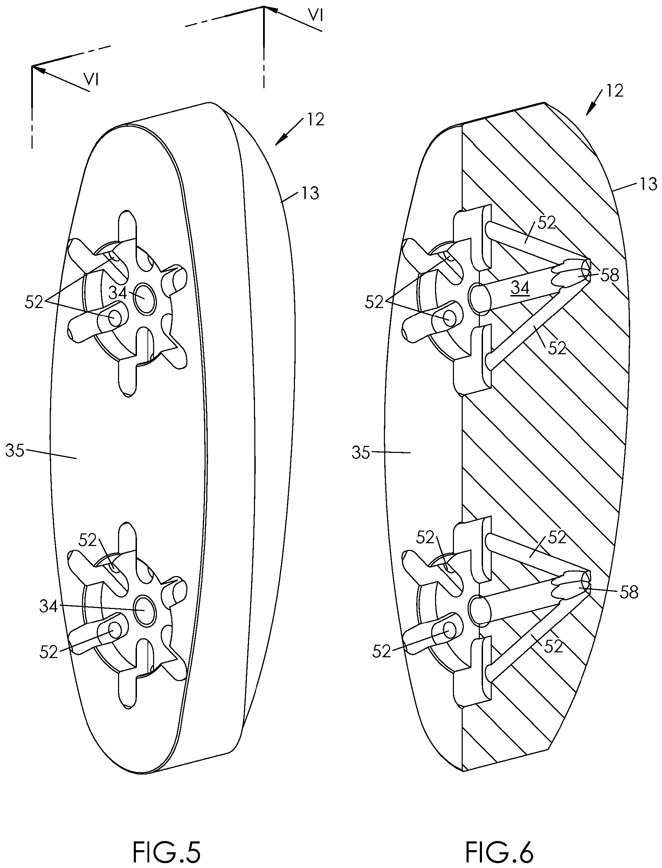

Comme on le voit bien sur les **FIG.5** et **FIG.6****,** l'insert **12** (comme son logement **9)** présente un contour asymétrique de révolution autour de l'axe **T,** ce qui limite la rotation de l'insert **12** autour de celui-ci. Plus précisément, l'insert **12** est, de préférence, plus haut (suivant l'axe **X** général du moule **5)** que large (dans un plan horizontal). Dans l'exemple illustré, l'insert **12** présente un contour ovale de grand axe sensiblement vertical. Toutefois, comme on le comprendra à la lecture de la suite de la description, chaque insert **12** est fixé de préférence à l'aide de deux vis, ce qui limite encore plus ses possibilités de rotation autour de l'axe **T.**

Comme illustré sur les dessins, chaque dispositif **11** de boxage comprend par ailleurs une chemise **14** rapportée, montée dans un évidement **15** complémentaire creusé dans la paroi **6** latérale (c'est-à-dire, dans l'exemple illustré, dans chaque demi-moule **5A, 5B)** et fixée à celle-ci. La chemise **14** est avantageusement réalisée en acier.

Chaque dispositif **11** de boxage comprend en outre un actionneur **16** solidaire de l'insert **12** pour déplacer celui-ci de sa position rétractée à sa position déployée, et réciproquement, et comprenant à cet effet un piston **17** monté en translation dans la chemise **14.** L'actionneur **16** est de préférence réalisé en aluminium.

Selon un mode de réalisation illustré sur les dessins, et plus particulièrement visible sur les **FIG.3** et **FIG.4****,** la chemise **14** comprend une paroi **18** de fond qui, lorsque la chemise **14** est insérée dans son évidement **15,** affleure une face **19** externe du moule **5,** et un cylindre **20** qui fait saillie transversalement de la paroi **18** de fond et se termine par un rebord **21** en regard d'une paroi **22** de fond de l'évidement **15,** qui sépare celui-ci de la réserve **3** en creux.

Ensemble, la chemise **14** et la paroi **22** de fond délimitent une chambre **23** dans laquelle se meut le piston **17.**

Le piston **17** subdivise la chambre **23** en une chambre **23A** arrière dite primaire et une chambre **23B** avant dite secondaire. Dans l'exemple illustré, la chambre **23A** primaire est limitée intérieurement par le piston **17** et extérieurement par la paroi **18** de fond de la chemise **14.** Par ailleurs, dans l'exemple illustré, la chambre **23B** secondaire est limitée extérieurement par le piston **17** et intérieurement par la paroi **22** de fond de l'évidement **15.**

La chemise **14** est pourvue, sur une face périphérique externe du cylindre **20,** d'une rainure **24** arrière destinée à accueillir un joint d'étanchéité. Le cylindre **20** est en outre percé d'au moins une ouverture **25** arrière (ici sous forme d'un perçage) débouchant dans la chambre **23A** primaire.

La chemise **14** est en outre pourvue, sur la face périphérique externe du cylindre **20,** d'une rainure **26** avant qui débouche dans la chambre **23B** secondaire par au moins une échancrure **27** pratiquée dans le rebord **21.**

Un joint **28** est monté sur la face externe du cylindre **20,** en étant comprimé entre celui-ci et l'évidement **15.**

Un segment **29** périphérique rapporté est monté sur la face externe du piston. Le segment **29** est avantageusement réalisé dans un matériau à faible coefficient de frottement, par exemple en bronze ou, de préférence, en matériau composite, tel le polytétrafluoroéthylène (PTFE).

Le joint **28** (fixe) et le segment **29** (mobile) assurent conjointement l'étanchéité des chambres **23A, 23B** l'une par rapport à l'autre.

Après son introduction dans l'évidement **15,** la chemise **14** est fixée à la paroi **6** latérale du moule **5.**

Selon un mode de réalisation illustré sur les figures, l'actionneur **16** comprend au moins un canon **30** qui s'étend radialement en saillie à partir du piston **17,** et sur lequel l'insert **12** est fixé au moyen d'une vis **31.** Dans le mode de réalisation préféré, tel qu'illustré sur les figures, deux canons **30** superposés sont prévus, qui s'étendent radialement en saillie à partir du piston **17,** et sur lesquels l'insert **12** est fixé au de moyen de deux vis **31** respectives.

Cet agencement avec deux organes de fixation (les deux vis **31)** contribue à empêcher la rotation de l'insert **12** dans son logement **9** autour de l'axe T susmentionné et évite une usure prématurée de l'insert **12** par frottement contre la paroi latérale du logement lors de ses multiples mouvements. En effet, dans un tel cas, un jeu peut être prévu entre l'insert 12 et le logement **9** afin d'éviter le contact.

Comme illustré sur les **FIG.3** et **FIG.4****,** le ou chaque canon **30** est creux et comprend un puits **32** central. L'insert **12** est fixé sur une extrémité **33** distale du ou de chaque canon **30,** opposée au piston **17.**

Plus précisément, dans l'exemple illustré, l'insert **12** est fixé sur le ou chaque canon **30** au moyen d'une vis **31** traversant l'extrémité **33** distale du canon **30** et venant se visser dans un trou **34** taraudé pratiqué dans une face **35** arrière de l'insert **12,** opposée à la face **13** frontale (et tournée vers le piston **17).**

Comme on le voit sur les **FIG.3** et **FIG.4****,** le ou chaque canon **30** est monté coulissant dans un trou **36** traversant, pratiqué dans la paroi **22** de fond de l'évidement **15.**

Un ou plusieurs joints **37** d'étanchéité (de préférence à lèvre) isolent la chambre **23B** secondaire du logement **9,** et de préférence également une ou plusieurs bagues **38** de guidage (par ex. réalisées en polytétrafluoroéthylène ou PTFE) sont interposées entre le ou chaque trou **36** traversant et le ou chaque canon **30** correspondant.

Chaque dispositif **11** de boxage comprend un circuit **39** fluidique de commande du déplacement du piston **17** au moins de sa position rétractée à sa position déployée. Selon un mode de réalisation avantageux, le circuit **39** fluidique est pneumatique, le fluide employé étant un gaz (typiquement de l'air) sous pression.

Le circuit **39** fluidique comprend à cet effet au moins un conduit **40** fluidique primaire d'alimentation de la chambre **23A** primaire, qui communique avec celle-ci par l'ouverture **25** arrière.

En pratique, et comme illustré en pointillés sur la **FIG.2****,** le conduit **40** fluidique primaire est percé dans le moule **5** et débouche, par une extrémité **41** amont, sur une face **42** supérieure du moule **5** et, par une extrémité **43** aval, dans l'évidement **15** au niveau de l'ouverture **25** arrière **(****FIG.2****).**

Selon un mode de réalisation illustré sur les dessins, la commande du déplacement du piston **17** est de type double effet, le circuit **39** fluidique étant configuré pour commander le déplacement du piston **17** correspondant également de sa position déployée à sa position rétractée.

A cet effet, le circuit **39** fluidique comprend un conduit **44** fluidique secondaire d'alimentation de la chambre **23B** secondaire, qui communique avec celle-ci par l'échancrure **27.**

En pratique, et comme illustré en pointillés sur la **FIG.2****,** le conduit **44** fluidique secondaire est percé dans le moule **5** et débouche, par une extrémité **45** amont, sur la face **42** supérieure du moule **5** et, par une extrémité **46** aval, dans l'évidement **15** au droit de la rainure **26** avant.

Comme on le voit sur la **FIG.1****,** l'unité **1** de moulage comprend un raccord **47** pneumatique d'alimentation en gaz au moins du conduit **40** fluidique primaire. A cet effet, le raccord **47** pneumatique comprend une arrivée **48** primaire en communication avec l'extrémité **41** amont du conduit **40** fluidique primaire.

L'arrivée **48** primaire est reliée à une source de gaz à pression élevée, avantageusement supérieure à 20 bars (et par ex. de 40 bars environ). La source de gaz à pression élevée est par exemple la source employée pour réaliser le soufflage du récipient **2.**

Dans l'exemple illustré, où la commande de déplacement du piston **17** est à double effet, et où, outre le conduit **40** fluidique primaire, le circuit **39** fluidique comprend un conduit **44** fluidique secondaire d'alimentation de la chambre **23B** secondaire, le raccord **47** pneumatique comprend une arrivée **49** secondaire en communication avec l'extrémité **45** amont du conduit **44** fluidique secondaire.

L'arrivée **49** secondaire est reliée à une source de gaz à pression comparativement plus faible, avantageusement inférieure ou égale à 12 bars (et par ex. de 7 bars environ). Cette source de gaz à pression comparativement plus faible est par ex. la source employée pour réaliser le présoufflage du récipient **2.**

Les extrémités **41, 45** amont des conduits **40, 44** débouchent avantageusement au voisinage l'une de l'autre, de manière à permettre leur branchement conjoint aux sources respectives de gaz sous pression via un unique raccord **47** pneumatique monté sur la face **42** supérieure du moule **5,** comme illustré sur la **FIG.1****.**

L'unité **1** de moulage comprend un circuit fluidique de régulation thermique de la paroi **6,** dans lequel circule un fluide caloporteur (de préférence un liquide, par ex. de l'eau ou de l'huile). Ce circuit est prévu pour maintenir la température de la paroi **6** à une température sensiblement constante, soit basse (typiquement de l'ordre de 10°C) pour assurer un refroidissement du récipient **2** tout juste formé, soit élevée (typiquement de l'ordre de 120°C) pour assurer une thermofixation du récipient **2** et accroître ainsi, par voie thermique, sa cristallinité (et donc sa résistance mécanique). Ce circuit fluidique inclut par ex. des canaux percés dans la paroi **6** du moule **5.** Ces canaux (non représentés sur les dessins en raison du plan de coupe choisi) communiquent avec un ou plusieurs raccords **50** sur lequel sont branchés des circuits d'alimentation et d'évacuation du fluide caloporteur **(****FIG.1****).**

Ce circuit fluidique assure la régulation thermique de la paroi du moule, mais il n'est pas en mesure d'assurer celle des inserts, qui viennent cependant en contact avec la matière du récipient **2** et qui, en l'absence de refroidissement, auraient tendance à surchauffer et empêcher le figeage de la matière.

C'est pourquoi chaque insert **12** fait l'objet d'une régulation thermique séparée de celle de la paroi **6.** Comme illustré sur les dessins, et plus particulièrement sur les **FIG.3** à **FIG.6****,** chaque insert **12** est percé de canaux **52.**

Ces canaux **52** sont en communication avec la chambre **23A** primaire par l'intermédiaire d'un circuit **51** fluidique, encore appelé circuit fluidique de régulation. Ce circuit **51** fluidique comprend au moins :
- Une première section **51A** ménagée dans la ou chaque vis **31** et qui communique avec les canaux **52** de l'insert **12,**
- Une deuxième section **51B** ménagée dans le piston **17** et qui communique avec la première section **51A.**

Classiquement, la vis **31** comprend une tête **53** munie d'une empreinte complémentaire d'un outil de vissage (par ex. une clé à six pans) et un corps **54** fileté.

Comme on le voit sur les dessins, et plus particulièrement sur les **FIG.3** et **FIG.4****,** la ou chaque vis **31** est percée d'un alésage central qui la traverse de part en part et forme la première section **51A** du circuit **51** fluidique.

Ainsi, dans l'exemple illustré, l'alésage central formant la première section **51A** de la vis **31** débouche, d'un côté (côté piston **17),** dans l'empreinte de la tête **53** et, du côté opposé (côté insert **12),** à une extrémité du corps **54.**

Par ailleurs, comme illustré notamment sur les **FIG.3** et **FIG.4****,** le ou chaque canon **30** est avantageusement creux, et comprend un puits central qui forme la deuxième section **51B** du circuit **51** fluidique.

Selon un mode préféré de réalisation illustré sur les dessins, et plus particulièrement sur les **FIG.3** et **FIG.4****,** l'unité **1** de moulage comprend au moins une tige **55** de guidage du piston **17,** sur laquelle celui-ci est monté coulissant. De préférence, une tige **55** de guidage respective est associée à chaque canon **30,** ce qui favorise encore davantage l'effet anti-rotation de l'insert **12.**

Plus précisément, et comme illustré, la ou chaque tige **55** est emboîtée (tout en étant coulissante) dans le puits **32** central du canon **30** respectif. Cette tige **55** est par exemple réalisée en acier, tout en étant de préférence revêtue d'une couche d'un matériau à faible coefficient de friction et à forte dureté (par ex. en PTFE).

Selon un mode préféré de réalisation, le circuit **51** fluidique de régulation thermique de l'insert **12** comprend une troisième section **51C,** ménagée dans la tige **55** de guidage et qui communique avec la deuxième section **51B.** Dans l'exemple illustré, la troisième section **51C** comprend un alésage **56** central pratiqué dans la tige **55** de guidage, et des trous **57** radiaux qui débouchent, d'une part, dans la chambre **23A** primaire et, d'autre part, dans l'alésage **56** central pour les mettre en communication. Comme on le voit sur les **FIG.3** et **FIG.4****,** l'alésage **56** central débouche dans le puits **32** central du canon **30.**

Comme on le voit bien sur les **FIG.5** et **FIG.6****,** les canaux **52** débouchent avantageusement sur la face **35** arrière de l'insert **12.**

Comme illustré sur les **FIG.3** et **FIG.4****,** et comme cela est encore mieux visible sur la **FIG.6****,** chaque insert **12** comprend une pluralité de canaux **52** divergents à partir d'un sommet **58** commun et répartis selon un cône. Plus précisément, et comme on le voit sur les dessins, le sommet **58** commun est confondu avec une extrémité interne du trou **34** taraudé dans lequel est logée la vis **31.**

Pour former un récipient **2,** on procède comme suit.

On commence par introduire dans le moule **5,** en position ouverte de celui-ci, une ébauche préalablement chauffée à une température supérieure à la température de transition vitreuse de sa matière (typiquement, une ébauche en PET, dont la température de transition vitreuse est de l'ordre de 80°C, est chauffée à une température de 120°C environ). Chaque insert **12** est alors dans sa position rétractée.

Le moule **5** est ensuite refermé, et un fluide (notamment de l'air) sous pression (par ex. d'environ 7 à 15 bars) est injecté dans l'ébauche, laquelle est, de préférence, simultanément étirée au moyen d'une tige coulissante. Sous la pression, la matière de l'ébauche est amenée au voisinage de la paroi **6** latérale et du fond **8** de moule, sans toutefois y être appliquée de manière intime.

Chaque insert **12** est ensuite déplacé vers sa position déployée. A cet effet, un fluide sous pression (ici de l'air à une pression élevée, supérieure ou égale à 20 bars et typiquement de l'ordre de 40 bars) est injecté, via le conduit **40** fluidique primaire et l'ouverture **25** arrière, dans la chambre **23A** primaire, cependant que le fluide présent dans la chambre **23B** secondaire est simultanément évacué, via la rainure l'échancrure **27** et la rainure **26** avant, par le conduit **44** fluidique secondaire. Sous la différence de pression entre la chambre **23A** primaire et la chambre **23B** secondaire, le piston **17** est, avec l'insert **12** dont il est solidaire, déplacé transversalement en direction de la cavité **7,** jusqu'à venir buter contre la paroi **22,** qui détermine ainsi la fin de course de l'insert **12** en position déployée.

L'insert **12** repousse la matière à la manière d'un poinçon (sans toutefois la perforer) jusqu'à atteindre sa position déployée, la poignée étant alors formée en creux dans le corps **4** du récipient **2 (****FIG.4****).**

Comme illustré en haut sur la **FIG.4****,** le fluide sous pression qui sert au déplacement du piston **17** (et avec lui de l'insert **12)** est mis à profit pour réguler thermiquement l'insert **12.** On voit en effet que le fluide sous pression présent dans la chambre **23A** primaire est aspiré vers le logement **9** par la dépression qui se crée dans celui-ci lors du déplacement de l'insert **12** vers sa position déployée. Le fluide circule alors dans le circuit **51** fluidique de régulation, comme indiqué par les flèches noires. Plus précisément, le fluide passe par les trous **57** radiaux, puis au travers de l'alésage **56** ; il circule ensuite dans le puits **32,** s'enfile dans la première section **51A** (l'alésage) de la vis qu'il traverse avant d'atteindre le trou **34** taraudé puis les canaux **52** qu'il traverse avant de sortir du côté de la face **35** arrière de l'insert **12,** débouchant alors dans le logement **9.**

Afin d'optimiser la circulation permettant la régulation thermique de l'insert **12,** selon un mode préféré de réalisation illustré sur la **FIG.4****,** un évent **59** de dégazage est pratiqué dans la paroi **6** latérale du moule **5** pour mettre le logement **9** en communication avec l'air libre. La présence de l'évent **59** permet un échappement de l'air contenu dans le logement **9** pendant les phases de soufflage (lorsque l'air est injecté pour pousser le piston) et entraîne une circulation d'air autour de l'insert **12.**

Il en résulte une régulation thermique efficace de l'insert **12,** au bénéfice d'un refroidissement de la matière du récipient **2** au contact de l'insert **12.** De la sorte, le figeage de la matière est favorisé, ce qui améliore la prise d'empreinte.

On a constaté que le refroidissement forcé de l'insert **12,** grâce à la circulation d'air autour et à l'intérieur de l'insert **12,** permettait d'obtenir des niveaux de refroidissement des zones en contact avec l'insert **12,** telles les réserves **3** en creux, jamais atteints jusqu'alors. La température de ces zones parvient à descendre largement au-dessous de la température de transition vitreuse (encore nommée TG ou température de ramollissement) du matériau constitutif du récipient : pour donner un ordre de grandeur, avec du PET dont la température de transition vitreuse est de l'ordre de 70°C et la température à laquelle est porté le matériau pour la formation du récipient est de l'ordre de 110°C, le refroidissement de l'insert **12** permet de faire descendre la température de ces zones à 60°C ou moins, soit un abaissement de température de plus de 50°C.

Après une temporisation (de quelques dixièmes de secondes), le récipient est dégazé, l'insert **12** est replacé dans sa position rétractée, puis le moule **5** est ouvert et le récipient **2** est évacué du moule **5.**

Afin de replacer l'insert **12** dans sa position rétractée, du fluide sous pression est injecté dans la chambre **23B** secondaire, via le conduit **44** secondaire, la rainure **26** avant et l'échancrure **27,** pendant que le fluide présent dans la chambre **23A** primaire est simultanément évacué, via l'ouverture **25** arrière, par le conduit **40** fluidique primaire. A cause de la différence de pression entre la chambre **23B** secondaire et la chambre **23A** primaire, le piston **17** est, avec l'insert **12** dont il est solidaire, déplacé transversalement vers l'extérieur du moule **5,** jusqu'à venir buter contre la paroi **18** de fond qui détermine la fin de course de l'insert **12** en position rétractée.

Le fait d'exploiter le fluide de pressurisation de la chambre **23A** primaire pour réguler thermiquement l'insert **12** permet en outre de faire l'économie d'un système de commande du débit (par ex. une électrovanne) propre au circuit **51** fluidique de régulation, puisque celui-ci n'est alimenté que lorsque le déplacement du piston **17** (c'est-à-dire de l'insert **12)** est commandé.

Le fait de mettre à profit des pièces structurelles (vis **31,** canon(s) **30,** tige(s) **55)** permet en outre un gain substantiel de place (aucun conduit rapporté de canalisation du fluide n'est nécessaire), au bénéfice de la compacité de l'unité **1** de moulage. Il est encore envisageable d'optimiser la consommation d'air en ajustant le diamètre des trous traversant les vis, voire en ayant des diamètres différents d'un trou à l'autre ou encore en ayant des trous de diamètre non constant.

## Revendications

1. Unité **(1)** de moulage pour le formage d'un récipient **(2),** cette unité **(1)** de formage comprenant :
- Un moule **(5)** muni d'une paroi **(6)** latérale définissant une cavité **(7)** à l'empreinte d'une partie du récipient **(2)** ;
- Un insert **(12)** ayant une face **(13)** frontale à l'empreinte d'une partie locale du récipient **(2),** mobile entre une position rétractée et une position déployée, cet insert **(12)** étant percé de canaux **(52)** ;
- Un piston **(17)** sur lequel est fixé l'insert **(12)** et qui assure la mobilité de celui-ci entre sa position rétractée et sa position déployée, ce piston **(17)** étant lui-même monté en translation dans un évidement **(15)** creusé dans la paroi **(6)** latérale, le piston **(17)** définissant une chambre **(23A)** primaire située du côté du piston **(17)** opposé à l'insert **(12)** et dans laquelle débouche au moins un conduit **(44)** d'amenée d'un fluide sous pression, pratiqué dans la paroi **(6)** latérale ;
Cette unité **(1)** de moulage étant **caractérisée en ce qu'**elle comprend au moins une vis **(31)** par laquelle l'insert **(12)** est fixé sur le piston **(17),** et **en ce que** les canaux **(52)** de l'insert **(12)** sont en communication fluidique avec la chambre **(23A)** primaire par l'intermédiaire d'un circuit **(51)** fluidique qui comprend au moins une première section **(51A)** ménagée dans la vis **(31)** et qui communique avec les canaux **(52)** de l'insert **(12),** et une deuxième section **(51B)** ménagée dans le piston **(17),** qui communique avec la première section (**51A**).

2. Unité **(1)** de moulage selon la revendication 1, **caractérisée en ce que** la vis **(31)** de fixation de l'insert **(12)** est percée d'un alésage central qui la traverse de part en part et forme la première section (**51A**) du circuit **(51)** fluidique.

3. Unité **(1)** de moulage selon la revendication 1 ou la revendication 2, **caractérisée en ce que** le piston **(17)** est pourvu d'au moins un canon **(30)** en saillie, sur lequel l'insert **(12)** est fixé par la vis **(31),** ce canon **(30)** étant creux et comprenant un puits **(32)** central qui forme la deuxième section (**51B**) du circuit **(51)** fluidique.

4. Unité **(1)** de moulage selon l'une des revendications 1 à 3, **caractérisée en ce qu'**elle comprend au moins une tige **(55)** de guidage du piston **(17),** sur laquelle celui-ci est monté coulissant.

5. Unité **(1)** de moulage selon la revendication 4, **caractérisée en ce que** le circuit **(51)** fluidique comprend une troisième section (**51C**) ménagée dans la tige **(55)** de guidage, qui communique avec la deuxième section (**51B**).

6. Unité **(1)** de moulage selon la revendication 5, **caractérisée en ce que** la troisième section (**51C**) du circuit **(51)** fluidique comprend un alésage **(56)** central pratiqué dans la tige **(55)** de guidage, et des trous **(57)** radiaux qui débouchent d'une part dans la chambre **(23A)** primaire et d'autre part dans l'alésage **(56)** central.

7. Unité **(1)** de moulage selon les revendications 3 et 6, prises en combinaison, **caractérisée en ce que** la tige **(55)** de guidage est emboîtée dans le canon **(30),** son alésage **(56)** central débouchant dans le puits **(32)** central de celui-ci.

8. Unité **(1)** de moulage selon l'une des revendications 4 à 7, **caractérisée en ce que** la tige **(55)** de guidage est montée sur une chemise **(14)** rapportée emboîtée dans l'évidement **(15),** dans laquelle le piston **(17)** est monté en translation, et avec laquelle le piston **(17)** définit la chambre **(23A)** primaire.

9. Unité **(1)** de moulage selon l'une des revendications précédentes, **caractérisée en ce que** les canaux **(52)** débouchent sur une face **(35)** arrière de l'insert **(12),** tournée du côté du piston **(17).**

10. Unité **(1)** de moulage selon la revendication 9, **caractérisée en ce que** l'insert **(12)** comprend une pluralité de canaux **(52)** divergents à partir d'un sommet **(58)** commun et répartis selon un cône.

## Patentansprüche

1. Formeinheit (1) zum Formen eines Behälters (2), wobei diese Formeinheit (1) Folgendes umfasst:
- Eine Form (5), die mit einer Seitenwand (6) versehen ist, die einen Hohlraum (7) mit dem Abdruck eines Abschnitts des Behälters (2) definiert;
- Einen Einsatz (12) mit einer Vorderseite (13) mit dem Abdruck eines lokalen Abschnitts des Behälters (2), der zwischen einer eingefahrenen Position und einer ausgefahrenen Position beweglich ist, wobei dieser Einsatz (12) von Kanälen (52) durchdrungen ist;
- Einen Kolben (17), auf dem der Einsatz (12) befestigt ist und der dessen Beweglichkeit zwischen dessen eingefahrener Position und dessen ausgefahrener Position sicherstellt, wobei dieser Kolben (17) selbst in einer Ausnehmung (15) translatorisch gelagert ist, die in der Seitenwand (6) eingelassen ist, wobei der Kolben (17) eine Primärkammer (23A) definiert, die sich auf der Seite des Kolbens (17) befindet, die dem Einsatz (12) gegenüberliegt, und in die mindestens eine Zuleitung (44) eines unter Druck stehenden Fluids mündet, die in die Seitenwand (6) eingebracht ist;
Wobei diese Formeinheit (1) **dadurch gekennzeichnet ist, dass** sie mindestens eine Schraube (31) umfasst, durch welche der Einsatz (12) auf dem Kolben (17) befestigt ist, und dadurch, dass die Kanäle (52) des Einsatzes (12) mit der Primärkammer (23A) durch einen Fluidkreislauf (51) in Fluidverbindung stehen, der mindestens einen ersten Abschnitt (51A), der in der Schraube (31) ausgebildet ist und der mit den Kanälen (52) des Einsatzes (12) in Verbindung steht, und einen zweiten Abschnitt (51B), der im Kolben (17) ausgebildet ist, der mit dem ersten Abschnitt (51A) in Verbindung steht, umfasst.

2. Formeinheit (1) nach Anspruch 1, **dadurch gekennzeichnet, dass** die Schraube (31) zur Befestigung des Einsatzes (12) von einer Mittelbohrung durchbohrt ist, die sie von einer Seite zur anderen durchquert und den ersten Abschnitt (51A) des Fluidkreislaufs (51) bildet.

3. Formeinheit (1) nach Anspruch 1 oder 2, **dadurch gekennzeichnet, dass** der Kolben (17) mit mindestens einem hervorstehenden Rohr (30) versehen ist, auf dem der Einsatz (12) durch die Schraube (31) befestigt ist, wobei dieses Rohr (30) hohl ist und einen Mittelschacht (32) umfasst, der den zweiten Abschnitt (51B) des Fluidkreislaufs (51) bildet.

4. Formeinheit (1) nach einem der Ansprüche 1 bis 3, **dadurch gekennzeichnet, dass** sie mindestens eine Stange (55) zur Führung des Kolbens (17) umfasst, auf der dieser gleitend gelagert ist.

5. Formeinheit (1) nach Anspruch 4, **dadurch gekennzeichnet, dass** der Fluidkreislauf (51) einen dritten Abschnitt (51C) umfasst, der in der Führungsstange (55) ausgebildet ist, der mit dem zweiten Abschnitt (51B) in Verbindung steht.

6. Formeinheit (1) nach Anspruch 5, **dadurch gekennzeichnet, dass** der dritte Abschnitt (51C) des Fluidkreislaufs (51) eine Mittelbohrung (56), die in die Führungsstange (55) eingebracht ist, und radiale Löcher (57), die einerseits in die Primärkammer (23A) und andererseits in die Mittelbohrung (56) münden, umfasst.

7. Formeinheit (1) nach den Ansprüchen 3 und 6 in Kombination, **dadurch gekennzeichnet, dass** die Führungsstange (55) in das Rohr (30) eingefügt ist, wobei ihre Mittelbohrung (56) in dessen Mittelschacht (32) mündet.

8. Formeinheit (1) nach einem der Ansprüche 4 bis 7, **dadurch gekennzeichnet, dass** die Führungsstange (55) auf einer Schale (14) montiert ist, die in die Ausnehmung (15) eingefügt angebracht ist, in welcher der Kolben (17) translatorisch gelagert ist und mit welcher der Kolben (17) die Primärkammer (23A) definiert.

9. Formeinheit (1) nach einem der vorhergehenden Ansprüche, **dadurch gekennzeichnet, dass** die Kanäle (52) auf einer Rückseite (35) des Einsatzes (12) münden, die zum Kolben (17) hin gewandt ist.

10. Formeinheit (1) nach Anspruch 9, **dadurch gekennzeichnet, dass** der Einsatz (12) eine Mehrzahl von Kanälen (52) umfasst, die von einem gemeinsamen Scheitelpunkt (58) auseinander laufen und kegelförmig verteilt sind.

## Claims

1. Moulding unit (1) for forming a container (2), this forming unit (1) comprising:
- a mould (5) provided with a lateral wall (6) defining a cavity (7) having the imprint of a part of the container (2);
- an insert (12) having a front face (13) having the imprint of a local part of the container (2) and able to move between a retracted position and a deployed position, this insert (12) having channels (52) created in it;
- a piston (17) on which the insert (12) is attached and which allows the latter to move between its retracted position and its deployed position, this piston (17) being itself mounted in translation in a recess (15) created in the lateral wall (6), the piston (17) defining a primary chamber (23A) which is located on the opposite side of the piston (17) from the insert (12) and into which opens at least one conduit (44) for supplying a pressurised fluid, this conduit being created in the lateral wall (6) ;
this moulding unit (1) being **characterized in that** it comprises at least one screw (31) by means of which the insert (12) is secured on the piston (17), and **in that** the channels (52) of the insert (12) are fluidically connected to the primary chamber (23A) via the intermediary of a fluidic circuit (51) that comprises at least one first section (51A) created in the screw (31) and that communicates with the channels (52) of the insert (12), and a second section (51B) created in the piston (17), that communicates with the first section (51A).

2. Moulding unit (1) according to Claim 1, **characterized in that** the screw (31) for securing the insert (12) has created in it a central bore that passes all the way through it and forms the first section (51A) of the fluidic circuit (51).

3. Moulding unit (1) according to Claim 1 or Claim 2, **characterized in that** the piston (17) is provided with at least one projecting barrel (30) onto which the insert (12) is secured by the screw (31), this barrel (30) being hollow and comprising a central well (32) which forms the second section (51B) of the fluidic circuit (51).

4. Moulding unit (1) according to one of Claims 1 to 3, **characterized in that** it comprises at least one stem (55) for guiding the piston (17), on which stem the piston is mounted so as to be able to slide.

5. Moulding unit (1) according to Claim 4, **characterized in that** the fluidic circuit (51) comprises a third section (51C) created in the guiding stem (55), which communicates with the second section (51B).

6. Moulding unit (1) according to Claim 5, **characterized in that** the third section (51C) of the fluidic circuit (51) comprises a central bore (56) created in the guiding stem (55), and radial holes (57) which open on one hand into the primary chamber (23A) and on the other hand into the central bore (56).

7. Moulding unit (1) according to Claims 3 and 6, considered in combination, **characterized in that** the guiding stem (55) is nested in the barrel (30), its central bore (56) opening into the central well (32) thereof.

8. Moulding unit (1) according to one of Claims 4 to 7, **characterized in that** the guiding stem (55) is mounted on an added liner (14) that is nested in the recess (15), in which liner the piston (17) is mounted in translation, and with which the piston (17) defines the primary chamber (23A).

9. Moulding unit (1) according to one of the preceding claims, **characterized in that** the channels (52) open onto a rear face (35), oriented towards the piston (17), of the insert (12).

10. Moulding unit (1) according to Claim 9, **characterized in that** the insert (12) comprises a plurality of channels (52) that diverge from a common vertex (58) and are distributed in the shape of a cone.
